# DEMANDE DE BREVET EUROPEEN

(11) **EP 1 683 711 A1**
(43) Date de publication de la demande: **26.07.2006**
(21) Numéro de dépôt: 06290102.0
(22) Date de dépôt: 17.01.2006
(51) Int. Cl.: B62D 53/08

(54) **Attelage coulissant longitudinalement pour ensemble routier articulé**

(30) Priorité: 21.01.2005 FR 0500616
(71) Demandeur: Vignes, Eric, 34000 Montpellier (FR)
(72) Inventeur: Vignes, Eric, 34000 Montpellier (FR)

(57) **Abrégé**

Il est constitué de platines prenant en sandwich une demi couronne à dents d'engrenages coulissant sur l'axe de son centre.

Le pivot peut être dissociable de la demi couronne et articulé par une articulation à cardan.

Le déplacement longitudinal du pivot par rapport aux platines est fonction de l'angle que fait le tracteur et sa remorque.

Ce système d'attelage est applicable à tout ensemble routier articulé quelque soit son poids et peut être indissociable d'autres systèmes.

## Description

Sur un ensemble routier articulé, il existe un espace entre le véhicule dit « tracteur » et la remorque ou la semi-remorque, afin que l'ensemble des deux ne vienne pas en contact lors des changements de direction.
- La présente invention consiste en un système d'attelage qui coulisse longitudinalement pendant la phase de changement de direction de l'ensemble routier.
- La position du point d'articulation de l'ensemble routier varie en fonction de l'angle que forme le tracteur avec sa semi-remorque.
- Ce système a l'avantage de n'autoriser que le minimum d'espace entre le tracteur et la semi-remorque en position linéaire, et de permettre, pendant les phases de changement de direction de l'ensemble routier que le tracteur et la semi-remorque ne rentrent pas en contact malgré l'espace minimum initial.

Ce système peut fonctionner sans éléments hydrauliques, électriques, informatiques ou /et électroniques.

Principe :
- Sur une des deux parties de l'ensemble routier est fixée une première platine dans laquelle est pratiqué une fente dans l'axe longitudinal de l'ensemble routier.
- La seconde partie de l'ensemble routier reçoit un axe de pivot pouvant coulisser dans la fente de la première platine. Pour éviter que le pivot ne coulisse longitudinalement de façon intempestive lors des accélérations et des freinages de l'ensemble routier, celui ci est solidaire d'une demi-couronne à dents d'engrenage sur sa circonférence. La première platine, sur sa surface de contact, comporte des deux coté de sa fente, positionnés parallèlement à celle-ci, deux rails à engrenages droits dont l'écartement entre les deux est égal au diamètre de la demie couronne crénelée. Les dents à engrenage, des différentes parties sont au même pas.Le centre de la demie couronne crénelée, lors de sa rotation provoquée par le pivot d'attelage à gauche ou à droite, se déplace dans l'axe longitudinal de la fente de la première platine. Le rayon de la couronne est égal ou supérieur à la distance qu'il existe entre la remorque et le tracteur lorsque leurs positons respectives, lors d'un changement de direction, passent par un angle de 45 degrés à gauche ou à droite de l'axe longitudinal de l'ensemble.
- En position longitudinale de l'ensemble routier, un système de verrouillage rend le pivot solidaire de sa position sur la platine tant que la demie couronne à dents d'engrenage n'a pas engrenée dans les rails à dents d'engrenages, par la gauche ou par la droite.

Une seconde platine fendue vient prendre en sandwich la demie couronne

Et les rails à dents d'engrenage avec la première platine, l'épaisseur des deux rails crénelés étant supérieure à l'épaisseur de la demie couronne afin d'en assurer le juste fonctionnement mécanique.

Pour éviter une trop grande fatigue mécanique de torsion à la tête d'attelage, lors des changements de direction de l'ensemble routier, le pivot d'attelage, peut être équipé d'une articulation à cardan.

Ce système autorise les mouvements de tangage et de roulis de la semi-remorque.

Ce système rend cinétiquement solidaire, partiellement ou complètement ,la remorque ou la semie remorque de son tracteur ,quelques soient leurs positions respectives dans la limite du domaine d'exploitation de l'ensemble routier.

Le déplacement longitudinal de l'axe de rotation est créé uniquement par la variation angulaire de l'ensemble « tracteur/ semi-remorque » ; il est variant de façon linéaire, sa seule variante peut être le rayon de la demi couronne qui détermine la longueur totale du déplacement du pivot d'attelage.

La demie circonférence de la demie couronne à dents d'engrenage est calculée de façon à ce que sa distance de développement linéaire soit au moins égale à l'équivalent « angle tracteur semi-remorque >90 degrés » et ceci avant que le tracteur ne soit en contact avec la remorque.

Ce système peut être indissociable d'autres types d'articulations et /ou d'attelages.

## Revendications

1. Système d'attelage coulissant longitudinalement pendant la phase de changement de direction d'un ensemble routier **caractérisé par le fait qu'**il ne comporte pas d'assistance ni hydraulique, ni électrique, ni informatique ni electonique. Il est composés de platines à fentes, d'une ou plusieurs demi-couronne à dents d'engrenage et de rails à dents d'engrenages. L'axe de pivot peut être équipé d'une articulation de type cardan. Cet attelage peut s'appliquer à tous les ensembles routiers articulés et ceci quel que soient leur poids. Le mouvement longitudinal est uniquement créé par la variation angulaire « tracteur/ semi-remorque » ou « tracteur/ remorque »

2. Dispositif selon la revendication 1 **caractérisé par le fait qu'**il est composé de rails à dents d'engrenages et d'une ou plusieurs demi couronne à dents d'engrenage au même pas.

3. Dispositif selon la revendication 1 **caractérisé par le fait qu'**il est composé par deux platines qui prennent en sandwich la demie couronne précitée.

4. Dispositif selon la revendication 1 **caractérisé par le fait que** le pivot d'attelage peut être équipé d'un système d'articulation de type cardan.

5. Dispositif selon la revendication 1 **caractérisé par le fait que** l'axe de pivot de l'attelage coulisse longitudinalement et de façon proportionnelle à l'angle de braquage de l'ensemble routier et peut être dissocié de la demi couronne.

6. Dispositif selon la revendication 1 **caractérisé par le fait que** ce système d'attelage est applicable à tous les types d'ensembles routiers articulés et ceci quel que soit leur poids

7. Dispositif selon la revendication 1 **caractérisé par le fait que** le déplacement longitudinal est variant de façon linéaire en fonction de l'angle « tracteur/remorque ou semi remorque »; la seule variante pouvant être le rayon de la demi couronne à dents d'engrenage qui détermine la course longitudinale maximum de l'axe de rotation du pivot d'attelage.

8. Dispositif selon la revendication 1 **caractérisé par le fait que** ce système rend cinètiquement solidaire, partiellement ou complètement ,la remorque ou la semi remorque de son tracteur ,quelques soient leurs positions respectives, dans la limite du domaine d'exploitation de l'ensemble routier..
